# EUROPÄISCHE PATENTANMELDUNG

(11) **EP 0 887 102 A2**
(43) Veröffentlichungstag der Anmeldung: **30.12.1998**
(21) Anmeldenummer: 98111643.7
(22) Anmeldetag: 24.06.1998
(51) Int. Cl.: B01J 2/12

(54) **Trommel zum Agglomerieren**

(30) Priorität: 25.06.1997 DE 19727020
(71) Anmelder: Heinze, Gerald, Prof. Dr., 49577 Kettenkamp (DE)
(72) Erfinder: Heinze, Gerald, Prof. Dr., 49577 Kettenkamp (DE)
(74) Vertreter: Heldt, Gert, Dr. Dipl.-Ing.

(57) **Zusammenfassung**

Es wird erfindungsgemäß eine Trommel beschrieben, deren Trommelkörper konisch ist. Am Ende mit dem größeren Durchmesser werden die zu agglomerierenden Stoffe in die Trommel eingefüllt und an der gegenüber liegenden Seite ausgetragen.
Die Trommel ist um die Längsachse drehbar. Durch diese Drehbewegung und die Konizität der Trommel entstehen unter Zufuhr einer Flüssigkeit Agglomerate: kugelförmige Gebilde mit in der Regel Durchmessern zwischen 1-30 mm.
Das Ziel der Agglomeration ist es, möglichst Agglomerate mit gleichgroßen Durchmessern herzustellen, um eine nachfolgende Aufbereitung durch Sieben zu vermeiden.
Durch die Erfindung der konischen Trommel mit einem Anstiegswinkel zum Austrag hin können Agglomerate mit einem engen Kornspekrum hergestellt werden.

## Beschreibung

Die Erfindung betrifft eine konische Trommel zum Agglomerieren eines fein verteilten Gutes, die um ihre Längsachse drehbar gelagert ist und deren Stirnseite am kleineren Durchmesser des Konus eine Austrittsöffnung aufweist.

Diese konische Trommel ist im Bereich eines Endabschnittes gelagert und im Bereich des anderen Endabschnittes mit einem Antrieb verbunden Der Innenraum der Trommel ist frei von die Agglomerierung beeinflussenden Einbauten.

Eine Vorrichtung dieser Art, ist aus der DE-PS 35 03 947 bekannt; sie besteht aus einer an beiden Seiten offenen zylindrischen Trommel, deren Längsachse einen Anstieg in Richtung auf die Austragöffnung aufweist. Die Austragsöffnung hat die Grösse des Trommeldurchmessers, während die gegenüberliegende Öffnung - in der Regel die Eintrittsöffnung für das zu granulierende Gut - den Fördereinrichtungen, wie Rohre, Förderbänder und Förderschnecken, dient und somit kleiner ist

Bei einer ähnlich ausgebildeten, aus der DE-PS 9 77 050 bekannten Vorrichtung ist die Trommel auf Hubböcken so gelagert, daß das Austragende aus der horizontalen Lage nach oben verschwenkbar ist. Aus der schweizerischen Patentschrift 3 15 573 ist es bekannt, Granulate in einer Trommel herzustellen, die als Topf bezeichnet wird. Es handelt sich dabei um eine stark verkürzte Granuliertrommel, die derart geneigt angeordnet sein soll, daß höchstens zwei Drittel der Bodenfläche der Trommel mit Material bedeckt sind. Eine Berechnung ergibt, daß die Bedeckung des Bodens nur dann unter zwei Drittel liegt, wenn die Länge des Topfes kleiner ist als der Durchmesser.

Zur Herstellung von Waschmitteln durch Sprühmischen sind ferner Drehtrommeln bekannt, die die Form eines Doppelkonus haben. Es handelt sich dabei um geschlossene Trommeln, aus denen die fertige Charge diskontinuierlich über eine an der Stelle des größten Durchmessers befindliche Öffnung abgezogen wird. In einer solchen Trommel, wie sie z.B. aus der DE-AS 11 97 064 bekannt ist, ist ein guter Mischeffekt erzielbar unter der Voraussetzung, daß geeignete Einbauten in Form von in bestimmter Weise angeordneten Leitschaufeln vorhanden sind. Der Doppelkonus der Trommel soll dabei bewirken, daß das Mischgut in der Mitte wieder zusammenläuft.

Aus der DE-PS 5 04 232 ist eine Drehtrommel zur Herstellung von Krümel aus Rohmehl für die Beschickung von Brennöfen bekannt, bei der es darauf ankommt, das Rohmehl gegebenenfalls unter Zugabe von Kohle gründlich zu durchmischen. Zu diesem Zweck sieht das Patent vor, an dem gegebenenfalls verjüngt ausgebildeten Einlaufende der Trommel Einbauten in Form von Rührschaufeln vorzusehen, die das mit Wasser benetzte Gut zum Einlaßende zurückwerfen.

Auch die aus der DE-AS 12 99 598 bekannte Drehtrommel enthält an ihrer Innenwand in bestimmter Weise geneigte Einbauten, um einen Teil des Gutes zur Aufgabeseite zurückzuführen. Dabei geht es ebenfalls in erster Linie um einen Mischeffekt.

Dem gegenüber bezieht sich die vorliegende Erfindung auf eine Agglomeriertrommel, deren Innenraum frei von Einbauten ist. Rührschaufeln oder andere Inneneinbauten, wie sie bei bekannten Vorrichtungen benutzt werden, würden gebildete Agglomerate zerstören und lediglich eine Durchmischung bewerkstelligen. Die Zusammenballung feindisperser Stoffe zu Agglomeraten ist mit derartigen Trommeln nicht möglich.

Bekannt ist ferner aus der Druckschrift DE-AS 17 92 014 insbesondere eine Trommel, deren Neigungswinkel in Richtung zur Austragöffnung stufenlos aus der Horizontalen heraus veränderbar ist. Konstruktiv ist bei dieser Trommel ausgeschlossen, daß die Trommel so gekippt wird, daß die Längsachse in Förderrichtung des Gutes einen Anstieg aufweist. Gemeinsamer Nachteil horizontal angeordneter Trommeln, wie sie etwa aus der Druckschrift DE-AS 11 44 694 bekannt ist, oder Trommeln die in Richtung auf ihre Austragöffnung geneigt sind, ist, daß diese einen sehr schlechten Klassiereffekt besitzen.

Als Klassiereffekt wird die Herstellung einer möglichst gleichmäßigen Granulatgröße verstanden. Unterschiedlich große Granulate haben beim Trocknen verschiedenes Verhalten: die kleineren trocknen eher als die großen. Kleinere und größere Granulate verdichten ein Haufwerk und verändern beispielsweise die Strömungsgeschwindigkeit von Gasen durch das Haufwerk

Um zu verhindern, daß die Agglomerate unterschiedlicher Größe zu den beschriebenen Nachteilen führen, werden solchen Trommeln Siebe nachgeschaltet, mit deren Hilfe die Agglomerate nach ihrer Größe aussortiert werden. Der Siebvorgang erfordert einen zusätzlichen Investitions- und Bearbeitungskostenaufwand. Trotz des relativ großen Durchsatzes kann daher die Trommel nur in speziellen Fällen wirtschaftlich sinnvoll eingesetzt werden.

Aufgabe der vorliegenden Erfindung ist es daher, die Trommel so zu verbessern, daß mit ihrer Hilfe ein guter Klassiereffekt beim Granulieren erreicht wird.

Diese Aufgabe ist dadurch zu lösen, daß die Längsachse der Trommel oder die Wandung der Trommel einen Anstieg in Richtung der Austragöffnung aufweist.

Der erste Fall ist beschrieben in der Druckschrift DE 35 03 047 C 2 und der zweite in der Druckschrift DE 40 08 479 C 2 . Dort handelt es sich um eine zylindrische Trommel zum Agglomerieren; hier um eine doppelkonische Trommel. Mit beiden Trommeln erreicht man einen guten Klassiereffekt, d.h., dass die fertigen, aus der Trommel austretenden Agglomerate nahezu gleiche Grössen aufweisen. Die Grössen der Agglomerate selbst sind durch Parameter wie Umdrehungsgeschwindigkeit, Anstiegswinkel, Massenströme und die Flüssigkeitszugabe zu beeinflussen.

Der Klassiereffekt ist ein wichtiges Kriterium für die technologische Güte einer Granuliertrommel. Es wurde nun erfindungsgemäss festgestellt, dass eine weitere Verbesserung des Granuliereffektes dadurch erzielt werden kann, dass einfach konische Trommeln zum Granulieren eingesetzt werden. Dadurch wird erfindungsgemäss die Gleichmäßigkeit der Granulatgrößen verbessert.

In der Fachsprache werden synonym die Bezeichnungen Agglomerate und Granulate verwendet, wenn sie durch Rollagglomeration hergestellt werden Demzufolge spricht man auch von Agglomerations- und Granuliertrommeln.

Die erfindungsgemäße Ausführung einer einfach konischen Trommel hat im Vergleich zur bekannten zylindrischen Trommel , die ebenfalls einen Anstieg in Richtung auf die Austrittsöffnung aufweist, und im Vergleich zur doppelkonischen Trommel einen wesentlichen Vorteil:
Verbesserung der Gleichmäßigkeit der Granulatgrößen beim Verlassen der Trommel. Oder anders ausgedrückt: das Kornspektrum wird enger. Das gilt ganz besonders, wenn kleine Granulate erzeugt werden sollen; beispielsweise in der Größe zwischen 1-6 mm.

Eine zylindrische Trommel weist auf der gesamten Strecke der Agglomeration von der Einfüllseite bis zum Austritt die gleiche Umdrehungsgeschwindigkeit auf. Eine Erhöhung der Umdrehungsgeschwindigkeit bedingt durch eine Konizität bringt bei den zu agglomerierenden Stoffen einen Vorteil hinsichtlich der Gleichmäßigkeit in der Granulatgröße.

Bei der doppelkonischen Trommel durchläuft das zu agglomerierende Material von der Eintrittsseite bis zur Austrittsseite zwar eine Erhöhung der Umdrehungsgeschwindigkeit, aber im Einfüllbereich der Trommel mit der höheren Konizität werden durch die dort stattfindende Kataraktwirkung übergroße Agglomerate zerschlagen.

Dabei hat sich der Nachteil gezeigt, daß bei manchen zu agglomerierenden Stoffen aufgrund des vorher stattgefundenen Zusammenballungseffektes die Zerschlagung nicht vollständig in die feindisperse Ausgangsform stattfindet, sondern unterschiedlich große Bruchstücke verbleiben, die die gewünschte Korngröße übersteigen.

Besonders bei einer gewünschten Korngröße von kleineren Agglomeraten, z.B. zwischen 1-6 mm ist das von Nachteil.
Dieser Nachteil wird wird durch die Erfindung behoben. Denn kleine, einmal in der einfach konischen Trommel gebildete Granulate bleiben bestehen.

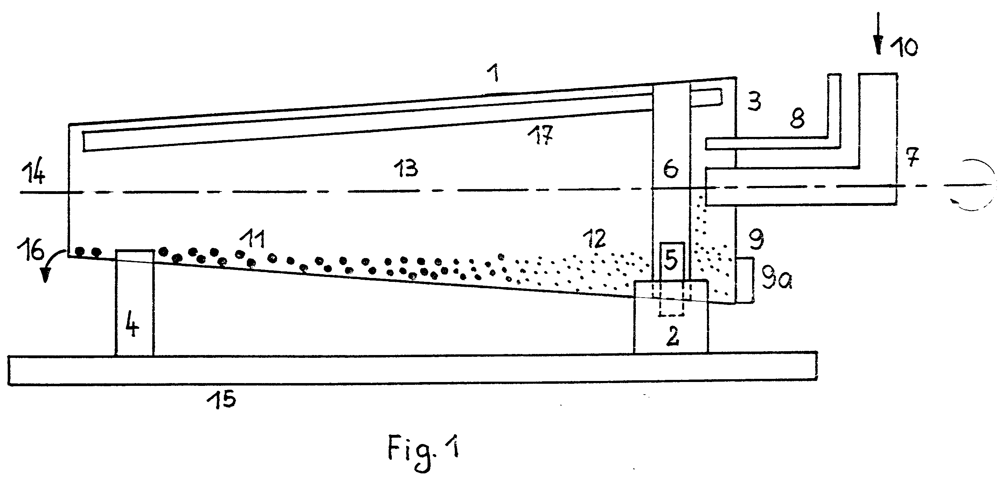

Fig. 1: schematische Darstellung von in Richtung auf ihre Ausfüllöffnung ansteigende, konische Trommel.

Eine Trommel besteht im wesentlichen aus einem konischen Trommelkörper **1**, einem Antrieb **2**, einer Einfüllvorrichtung **3** sowie aus einer Hubvorrichtung **4**. Der Anstiegswinkel der konischen Trommel wird dem zu granulierenden Stoff entsprechend vor dem Bau der Trommel festgelegt. Zusätzlich kann eine Hubvorrichtung **4** vorgesehen werden, die Korrekturen des Anstiegswinkels zulässt. Die Hubvorrichtung kann von Hand oder hydraulisch zu betätigen sein

Der Antrieb **2** ist auf geeignete Weise mit der Trommel verbunden. Beispielsweise mittels Kette, Zahnrad oder Reibrad **5** mit einer Lauffläche auf der Außenfläche **6** der Trommel.

Die Einfüllvorrichtung **3** kann zum Beispiel aus einer Förderschnecke oder Förderband **7** sowie einem Flüssigkeitszulauf **8** bestehen. Die beschriebenen Einfüllvorrichtungen münden in eine Einfüllöffnung **9** ein, die an einer der beiden Stirnflächen **9** und **16** des konischen Trommelkörpers **1** ausgebildet ist. Über die Förderschnecke oder das Förderband **7** werden die zu granulierenden Stoffe von einem Zulauf **10** in die konische Trommel gefördert. Unter Zugabe von Flüssigkeit **8** bilden sich Granulate **11**.

Der Trommelkörper **1** ist mit seiner Längsachse **14** gegenüber einer sich in horizontaler Richtung erstreckenden Unterkonstruktion **15** parallel zur Achse **14** gelagert.

Über die Einfüllvorrichtung **3** wird das zu agglomerierende Gut **12** in den Innenraum **13** des Trommelkörpers **1** eingegeben, nachdem der Trommelkörper über den Antrieb **2** in drehende Bewegung versetzt worden ist. Aufgrund der abwälzenden Bewegungen innerhalb des sich drehenden Trommelkörpers **1** bilden sich Agglomerate **11**.

An der Trommelseite mit dem größeren Durchmesser **9** befindet sich eine zu öffnende Vorrichtung **9a**, um - wenn notwendig - eine Restentleerung der Trommel zu ermöglichen.

Bei fein verteiltem Agglomerationsgut - auch Partikeln genannt - bilden sich erst Keime, an denen sich weitere Partikeln anlagern bis die gewünschte, relativ gleichmässige Größe der Agglomerate erreicht ist.

Die Größe der Agglomerate ist über die Parameter Umdrehungsgeschwindigkeit, Menge an zugegebener Flüssigkeit, Massenstrom und Anstiegswinkel der Trommel zu beeinflussen.

Der Trommelkörper besitzt im Regelfall einen größten Durchmesser, der zwischen 0.5 m und 4 m liegt. Die Lange des Trommelkörpers beträgt in der Regel das zwei- bis vierfache des Durchmessers. In Abhängigkeit vom Anstiegswinkel liegt der Füllungsgrad der Trommel bei mindestens 10% des gesamten Trommelvolumens, aber meistens bei 15% bis 30%.

Dabei ist davon auszugehen, daß der Anstieg der konischen Trommel bedingt durch die Wahl der Konizität zwischen 1° und 25° liegt, vorzugsweise zwischen 3° und 16°.

Das Verhältnis von Länge zum Durchmesser der Trommel beträgt mindestens 1 : 1, ist im Regelfall aber größer.

Im Inneraum **13** des Trommelkörpers **1** ist ein Abstreifer **17** befestigt, der sich parallel zur Trommelwand erstreckt.

Der Zulauf der Flüssigkeit und der Transport des zu agglomerierenden Stoffes kann von beiden Seiten **9** und **16** erfolgen. Erfolgt er ausschließlich von der Austragsseite **16**, dann kann die gegenüberliegende Seite **9** geschlossen sein. Aus der Austragsöffnung **16** werden die Agglomerate **11** aus dem Innenraum der Trommel **13** herausgefördert.

Die Trommel dreht sich mit einer Geschwindigkeit zwischen 3 und 20 Umdrehungen pro Minute in Abhängigkeit vom Durchmesser der Trommel. Die Umfangsgeschwindigkeit liegt im Regelfall zwischen 0.8 m/s bis 1.5 m/s.

## Patentansprüche

1. Trommel zur Agglomerierung von feindispersen Stoffen, wobei die Trommel im Bereich eines Endabschnittes gelagert und im Bereich des anderen Endabschnittes mit einem Antrieb verbunden ist, mit dem sie um ihre Längsachse drehbar ist, und wobei der Innenraum der Trommel frei von die Agglomerierung beeinflussenden Einbauten ist, dadurch gekennzeichnet, dass die Trommel **1** die Form eines Konus hat mit einer sich zum Endabschnitt verjüngenden Wandung und an diesem Ende offen ist zum Austrag der Agglomerate.

2. Trommel nach Anspruch 1, dadurch gekennzeichnet, dass sie **1** an beiden Enden offen ist, wobei die Öffnung an der Austragsseite **16** dem kleineren Durchmesser der konischen Trommel entspricht und die Einfüllseite eine Öffnung **9** hat zum Durchlass des Flüssigkeitszulaufs **8** und einer Förderschnecke oder eines Förderbandes **7**.

3. Trommel nach den Ansprüchen 1 und 2, dadurch gekennzeichnet, dass die Öffnung mit dem kleineren Durchmesser **16** die Austragöffnung für die Agglomerate ist.

4. Trommel nach den Ansprüchen 1 bis 3, dadurch gekennzeichnet, dass an die Endabschnitte der Trommel ringförmige Segmente angesetzt sind, die an dem einen Ende auf einem Kugellager abrollbar sind und an dem anderen Ende ein Triebteil der Antriebs **6** bilden

5. Trommel nach den Ansprüchen 1 bis 4, dadurch gekennzeichnet, dass sie in dem Bereich, in dem sie den größten Durchmesser hat, mit einer verschließbaren Öffnung für die Restentleerung **9a** versehen ist.

6. Trommel nach den Ansprüchen 1 bis 5, dadurch gekennzeichnet, dass in eine der beiden Öffnungen der Trommel eine Zuführungseinrichtung für die zu agglomerierenden Stoffe **7** und in die gleiche oder die andere Öffnung der Trommel eine Sprüheinrichtung **8** mit einem oder mehreren Sprühköpfen eingeführt ist.

7. Trommel nach den Ansprüchen 1 bis 3, dadurch gekennzeichnet, dass sie **1** an dem Ende mit dem größten Durchmesser des Konus geschlossen ist und entweder sowohl die Zuführungseinrichtung **7** und die Sprüheinrichtung **8** durch das offene Ende in die Trommel eingeführt sind oder daß eine der Einrichtungen **7 oder 8** mittig durch eine angepasste Öffnung im ansonsten geschlossenen Ende der Trommel **9** geführt ist.
